# EUROPÄISCHE PATENTSCHRIFT

(11) **EP 2 934 931 B1**
(45) Veröffentlichungstag und Bekanntmachung des Hinweises auf die Patenterteilung: **27.03.2019**
(21) Anmeldenummer: 13795429.3
(22) Anmeldetag: 13.11.2013
(51) Int. Cl.: B60K 7/00, F16H 57/033

(54) **FAHRZEUG UND GETRIEBE**
VEHICLE AND GEARBOX
VÉHICULE ET TRANSMISSION

(30) Priorität: 21.12.2012 DE 102012025150
(43) Veröffentlichungstag der Anmeldung: 28.10.2015
(73) Patentinhaber: SEW-EURODRIVE GmbH & Co. KG, 76646 Bruchsal (DE)
(72) Erfinder: DEGEN, Dirk, 76646 Bruchsal (DE); JUNGINGER, Alexander, 75196 Remchingen-Wilferdingen (DE)
(86) Internationale Anmeldenummer: PCT/EP2013/003413
(87) Internationale Veröffentlichungsnummer: WO 2014/094942

(56) Entgegenhaltungen:
- EP-A1- 0 867 641
- EP-A2- 2 036 755
- WO-A1-02/067744
- DE-U1-202007 004 858
- US-A- 2 623 406

## Beschreibung

Die Erfindung betrifft ein Fahrzeug und ein Getriebe.

Es ist allgemein bekannt, dass ein Fahrzeug einen Antrieb mit Getriebe aufweist.

Aus der EP 2 036 755 A2 ist eine Antriebsanordnung für ein Rad bekannt. der gattungsgemässen Aus WO 02 / 067744 A1 ist eine Radaufnahme für einen autonomen Reinigungsroboter bekannt.

Aus der DE 20 2007 004 858 U1 ist ein Drehmodul bekannt.

Aus der EP 0 867 641 A1 ist ein mehrteiliges Getriebegehäuse bekannt.

Aus der US 2 623 406 ist ein Getriebegehäuse bekannt.

Der Erfindung liegt daher die Aufgabe zugrunde, ein Fahrzeug mit Getriebe weiterzubilden, insbesondere wobei die Anzahl der verschiedenen Komponenten gering gehalten werden soll.

Erfindungsgemäß wird die Aufgabe bei dem Fahrzeug nach den in Anspruch 1 und bei dem Getriebe nach den in Anspruch 10 angegebenen Merkmalen gelöst.

Wichtige Merkmale der Erfindung bei dem Fahrzeug sind, dass das Fahrzeug ein Fahrgestell aufweist, an welchem Lenkrollen angeordnet sind, insbesondere so dass das Fahrzeug auf einer Verfahrebene verfahrbar ist,
wobei eine Antriebseinheit über ein Drehlager mit dem Fahrgestell verbunden ist,
wobei ein erstes Rad der Antriebseinheit drehfest mit der Abtriebswelle eines ersten Getriebes der Antriebseinheit verbunden ist, wobei das erste Getriebe von einem ersten Elektromotor angetrieben ist,
wobei das erste Getriebe eine Linearführung umfasst, indem am Gehäuse der Antriebseinheit als Linearführungselement ein Bolzen, insbesondere Gewindebolzen oder Schraubbolzen oder Schraube, angeordnet ist, der durch eine Bohrung des Getriebes, insbesondere des Gehäuses des ersten Getriebes , hindurchragt und ein Federelement am Bolzen oder an einem Vorsprung des Bolzens, insbesondere an einer am Bolzen befestigten Mutter, abgestützt ist, das auf das erste Getriebe, insbesondere auf das Gehäuse des ersten Getriebes, drückt.

Von Vorteil ist dabei, dass ein sehr kompakter Antrieb erreichbar ist, da das Getriebe nicht nur Untersetzungsfunktion und Drehmomentvergrößerungsfunktion aufweist sondern auch eine Linearführungsfunktion. Somit sind keine zusätzlichen Linearführungsmittel notwendig. Außerdem ist der Anpressdruck des Rades an Unebenheiten in der Verfahrfläche anpassbar.

Bei einer vorteilhaften Ausgestaltung ist ein zweites Rad der Antriebseinheit drehfest mit der Abtriebswelle eines zweiten Getriebes der Antriebseinheit verbunden, wobei das zweite Getriebe von einem zweiten Elektromotor angetrieben ist,

wobei das zweite Getriebe eine insbesondere gleichartige Linearführung umfasst, indem am Gehäuse der Antriebseinheit als Linearführungselement ein Bolzen, insbesondere Gewindebolzen oder Schraubbolzen oder Schraube, angeordnet ist, der durch eine Bohrung des Getriebes, insbesondere des Gehäuses des ersten Getriebes, hindurchragt und ein Federelement am Bolzen oder an einem Vorsprung des Bolzens, insbesondere an einer am Bolzen befestigten Mutter, abgestützt ist, das auf das erste Getriebe, insbesondere auf das Gehäuse des ersten Getriebes, drückt. Von Vorteil ist dabei, dass beide Räder koaxial anordenbar sind und trotzdem dasselbe Getriebe verwendbar ist. Dies wird erreichbar durch die symmetrische Ausführung des Getriebes.

Bei einer vorteilhaften Ausgestaltung sind die beiden Räder koaxial zueinander angeordnet, wobei die Rotorwellen der beiden zugeordneten Motoren ebenfalls koaxial zueinander angeordnet sind. Von Vorteil ist dabei, dass ein kompakter Aufbau und eine geringe Teilezahl einhaltbar ist und zusätzlich eine parallele Kabelführung. Außerdem ist ein gleichmäßiges Antreiben des Fahrzeugs erreichbar und somit eine einfache Steuerung des Fahrzeugs.

Bei einer vorteilhaften Ausgestaltung weist zumindest eines der Räder Markierungen auf und die Antriebseinheit weist einen Sensor zum Detektieren der Markierungen auf,

insbesondere wobei der Sensor elektrisch verbunden ist mit einer elektronischen Schaltung, insbesondere mit einem Umrichter, welche den das Rad antreibenden Motor speist. Von Vorteil ist dabei, dass eine Winkelerfassung und somit eine verbesserte Fahrregelung erreichbar ist.

Bei einer vorteilhaften Ausgestaltung ist in der jeweiligen Bohrung eine jeweilige Buchse angeordnet, in welcher der jeweilige Bolzen gleitgelagert ist,
insbesondere wobei die jeweilige Buchse aus Kunststoff gefertigt ist,
insbesondere wobei die jeweilige Buchse in die jeweilige Bohrung eingepresst verbunden ist. Von Vorteil ist dabei, dass eine kostengünstige Linearführung herstellbar ist.

Bei einer vorteilhaften Ausgestaltung fungiert der die jeweilige Bohrung aufnehmende Bereich des jeweiligen Gehäuses des ersten Getriebes als Kühlkörper. Von Vorteil ist dabei, dass eine verbesserte Kühlung durch die vergrößerte Ausführung des Getriebes erreichbar ist.

Bei einer vorteilhaften Ausgestaltung weist jedes der Getriebe einen ersten und einen zweiten Flanschabschnitte auf, wobei der jeweilige Motor wahlweise am ersten der Flanschabschnitte oder am zweite der Flanschabschnitte montierbar ist,
insbesondere wobei der nicht mit dem jeweiligen Motor verbundene Flanschabschnitt mittels eines jeweiligen Deckelteils verschlossen ist, insbesondere das öldicht mit dem jeweiligen Gehäuse des jeweiligen Getriebes verbunden ist. Von Vorteil ist dabei, dass das Getriebe symmetrisch ausgeführt ist und somit zwei Motoren das Getriebe antreiben können und/oder jeweils dasselbe Getriebe für das linke und rechte Rad der Antriebseinheit verwendbar ist, so dass eine koaxiale Anordnung der Räder ermöglicht ist trotz der Verwendung zweier Getriebe.

Bei einer vorteilhaften Ausgestaltung sind das erste und zweite Getriebe gleichartig ausgeführt und das zweite Getriebe ist gegenüber dem ersten Getriebe um 180° gedreht und in Radachsrichtung beabstandet angeordnet, wobei die Drehrichtung parallel zu der Normalenrichtung der Verfahrebene ist,
wobei jedes Getriebe einen ersten und einen zweiten Flanschabschnitt aufweist, insbesondere wobei die beiden Flanschabschnitte, insbesondere deren Bohrbilder, gleichartige ausgeführt sind,
wobei der das erste Rad antreibende Motor am ersten Flanschabschnitt des zugeordneten Getriebes befestigt ist und
wobei der das zweite Rad antreibende Motor am anderen Flanschabschnitt des zugeordneten Getriebes befestigt ist. Von Vorteil ist dabei, dass eine kompakte Anordnung und ein hohe Drehmoment erreichbar ist.

Bei einer vorteilhaften Ausgestaltung weist jeder Motor ein Steckverbinderteil auf zum Anschluss eines Versorgungskabels,
wobei die Steckverbinderteile der Motoren parallel ausgerichtet sind. Von Vorteil ist dabei, dass eine einfache übersichtliche Kabelführung ausführbar ist.

Wichtige Merkmale bei dem Getriebe sind, dass das Getriebegehäuse zwei gleichartige Flanschbereiche aufweist, wobei das Gehäuse eines Elektromotors wahlweise an einem der beiden Flanschbereiche schraubverbindbar ist,
wobei der Elektromotor eine Rotorwelle aufweist, die mit einer Verzahnung drehfest verbunden ist, welche mit einem Zahnrad des Getriebes in Eingriff steht,
wobei das Zahnrad mit einer Welle, insbesondere Abtriebswelle, des Getriebes drehfest verbunden ist, welche gelagert ist im Gehäuse des Getriebes,
insbesondere wobei mit der Welle ein Rad einer Antriebseinheit drehfest verbunden ist.

Von Vorteil ist dabei, dass wahlweise zwei Motoren oder nur ein Motor das Getriebe antreibend vorsehbar sind. Durch die symmetrische Ausführung ist eine koaxiale Anordnung oder im Wesentlichen spiegelsymmetrische Anordnung der Antriebe des rechten und linken Rades der Antriebseinheit eines Fahrzeugs vorsehbar. Somit ist eine gleichmäßig Gewichtsverteilung und ein einfaches Steuern des Fahrzeugs erreichbar.

Bei einer vorteilhaften Ausgestaltung ist jeder Flanschbereich als Quadratflansch ausgeführt, wobei eine diskrete Drehsymmetrie des Flanschbereichs von jeweils 90° vorgesehen ist., insbesondere wobei die Drehsymmetrieachse der Drehsymmetrie der Rotorwellenachse gleicht. Von Vorteil ist dabei, dass die Motoren auch derart gedreht um 90°, 180° oder 270° an das Getriebe anflanschbar sind, dass die Kabelführung parallel ausführbar ist.

Bei einer vorteilhaften Ausgestaltung sind die beiden Flanschbereiche symmetrisch zur Achse des Zahnrads angeordnet,
insbesondere also der Schwerpunkt jedes Flanschbereichs denselben Achsabstand zur Achse des Zahnrades aufweist. Von Vorteil ist dabei, dass wiederum die koaxiale Anordnung der Räder der Antriebseinheit in einfacher Weise und durch Verwendung derselben Getriebe zum Antreiben der beiden Räder verwendbar sind.

Bei einer vorteilhaften Ausgestaltung umfasst das Getriebe Linearführungen,
wobei das Getriebe mittels der Linearführung linear relativ bewegbar zu einer Tragplatte ist. Von Vorteil ist dabei, dass ein kompakter Aufbau der Antriebseinheit erreichbar ist.

Bei einer vorteilhaften Ausgestaltung weist das Getriebegehäuse Bohrungen auf, in die jeweils eine Buchse, insbesondere eine Kunststoffbuchse, eingepresst ist, welche als Gleitlager für einen jeweiligen in der Buchse aufgenommene, insbesondere durch die jeweilige Bohrung hindurchragenden, Bolzen fungiert. Von Vorteil ist dabei, dass eine einfache Gleitlagerung ausführbar ist.

Bei einer vorteilhaften Ausgestaltung ist ein Federelement zwischen dem Getriebegehäuse und dem Bolzen oder einem mit dem Bolzen verbundenen Teil vorgesehen. Von Vorteil ist dabei, dass ein Anpressen des Rades an die Verfahrfläche ausführbar ist.

Die Erfindung wird nun anhand von Abbildungen näher erläutert:

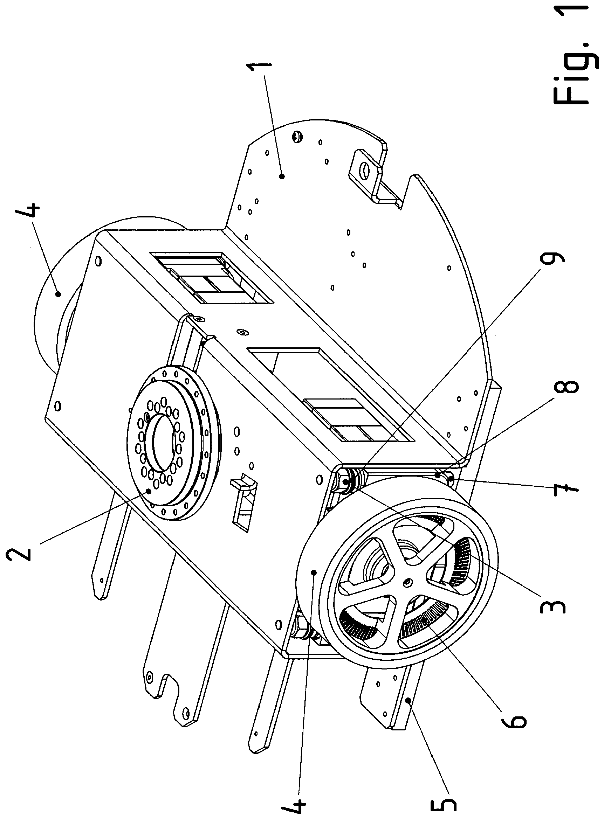

In der Figur 1 ist eine Schrägansicht auf eine Antriebseinheit eines Fahrzeugs, insbesondere Fahrerloses Transportsystem (FTS) oder automated guided vehicle (AGV), gezeigt.
In der Figur 2 ist eine Draufsicht von unten gezeigt.

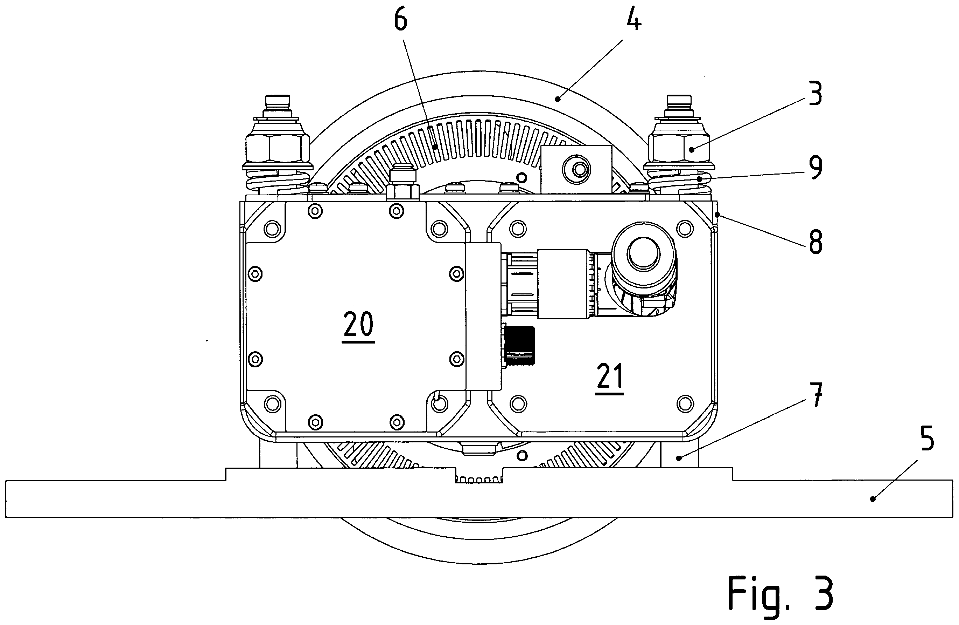

In der Figur 3 ist eine Seitenansicht auf die Antriebseinheit gezeigt.

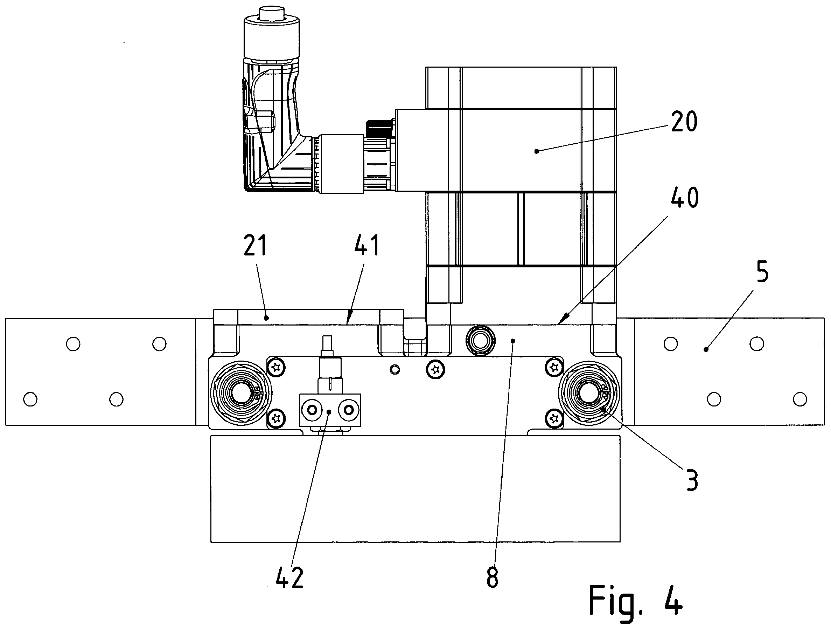

In der Figur 4 ist eine Draufsicht auf einen der Getriebemotoren der Antriebseinheit gezeigt.

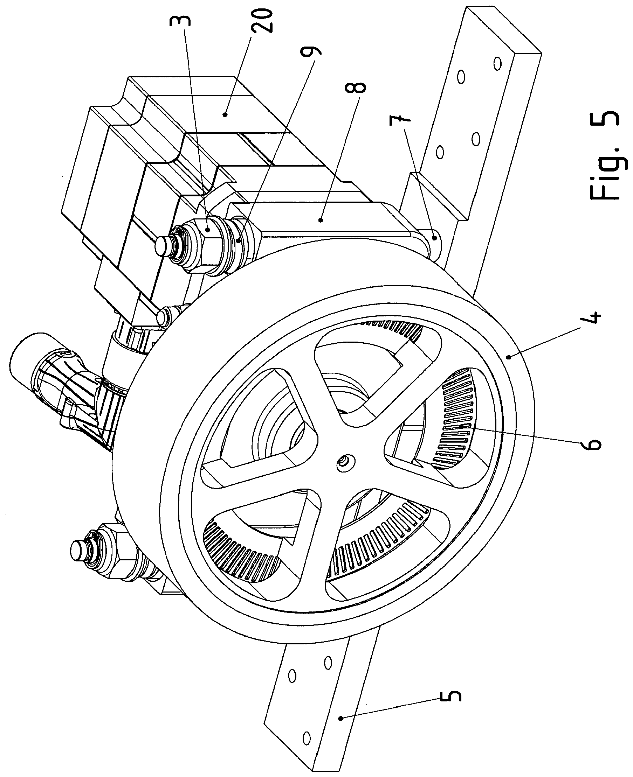

In der Figur 5 ist eine zugehörige Schrägansicht gezeigt.

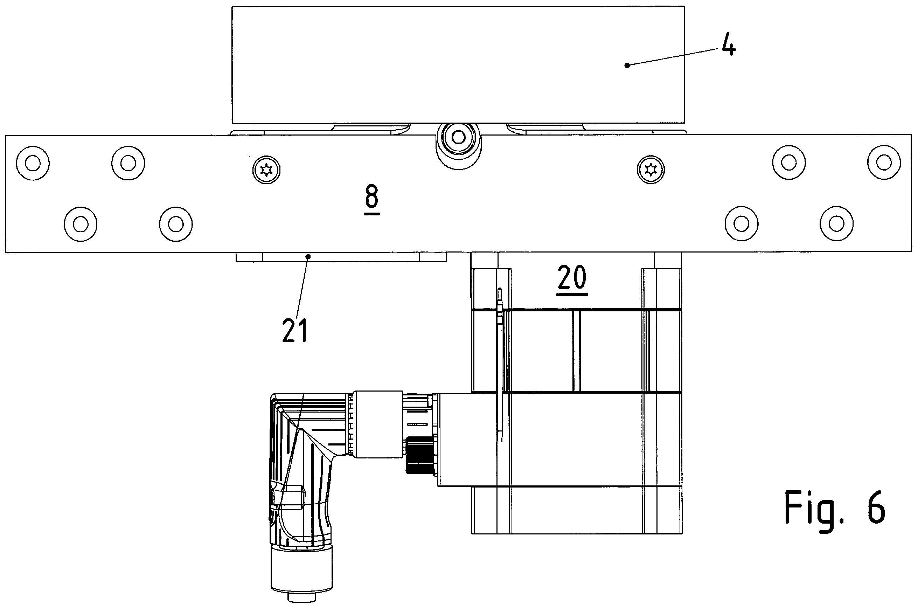

In der Figur 6 ist eine zugehörige Draufsicht von unten gezeigt.

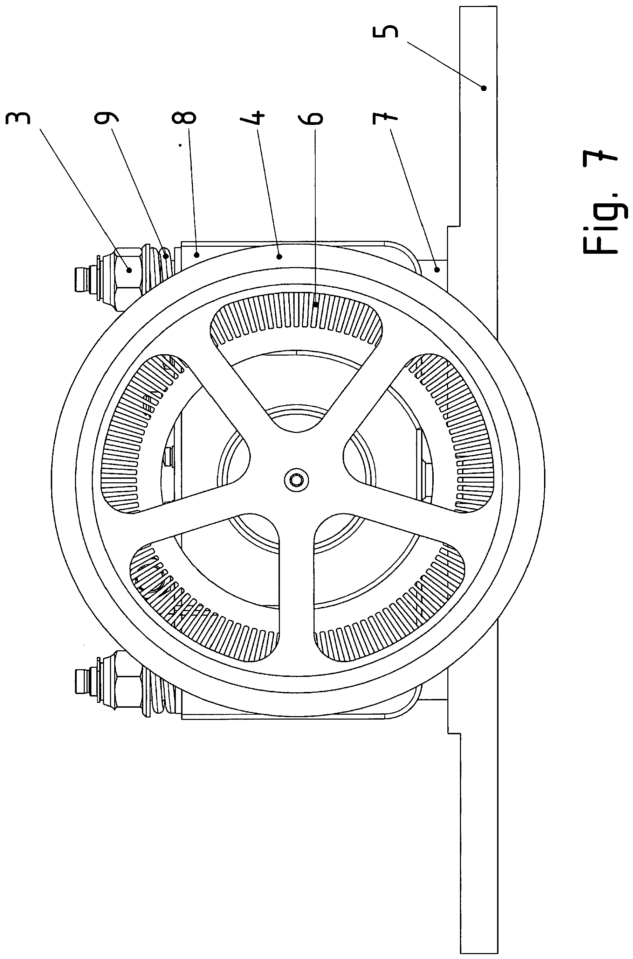

In der Figur 7 ist eine Seitenansicht aufs Rad 4 gezeigt.
In der Figur 8 ist ein Schnitt durch das Getriebe 8 mit Motor 20 gezeigt, der an einem ersten Flanschberiech 40 mit dem Getriebe zentriert verbunden ist.
In der Figur 9 ist eine Draufsicht auf das Rad 4 gezeigt.
In der Figur 10 ist ein Querschnitt durch das Getriebe 8 gezeigt.

Wie in den Figuren gezeigt, ist eine Antriebseinheit mit zwei koaxial zueinander angeordneten Rädern 4 vorgesehen, die jeweils von einem Getriebe 8 angetrieben werden, das von einem jeweiligen Elektromotor 20 angetrieben wird.

Das Fahrzeug weist ein in den Figuren nicht gezeigtes Fahrgestell, insbesondere Chassis, auf, das mittels Lenkrollen auf einer Verfahrebene verfahrbar ist. Die Gewichtskraft des Fahrzeugs und einer gegebenenfalls transportierten Last wird im Wesentlichen über die Lenkrollen in den Boden geleitet.

An der Unterseite des Fahrgestells des Fahrzeugs ist die Antriebseinheit angeordnet und über ein Drehlager 2 mit dem Fahrgestell verbunden.

Das Antriebsgehäuseteil 1 der Antriebseinheit hängt also sozusagen am Fahrgestellt über das zwischengeordnete Drehlager.

Alternativ ist am Boden des Fahrgestells eine Achse montiert, um die die Antriebseinheit mittels einer aufgeschobenen Buchse der Antriebseinheit als Drehlager drehbar gelagert ist. Die Buchse ist mit dem Antriebsgehäuseteil 1 fest verbunden.

Am Antriebsgehäuseteil ist eine Tragplatte 5 befestigt, mit welcher zwei Bolzen 7, die als Führungsbolzen wirken, verbunden sind.

Jeder Bolzen 7 ragt durch eine Bohrung des Gehäuses des Getriebes 8 hindurch und ist auf der von der Tragplatte 5 abgewandten Seite mit einer Mutter schraubverbunden.

Alternativ wäre statt dem Bolzen 7 mit der Mutter 3 auch eine Schraube mit Schraubkopf verwendbar.

Die Mutter 3 wirkt als Abstützelement für ein Federelement 9, das sich einerseits an der Mutter 3 abstützt und mit ihrem anderen Ende auf das Gehäuse des Getriebes 8 drückt.

Die abtreibende Welle des vom Elektromotor 20 angetriebenen Getriebes 8 ist mit einem Rad 4 drehfest verbunden. Der Elektromotor an einem ersten Flanschbereich 40 mit dem Getriebe 8 verbunden.

Somit wird das Rad 4 samt Getriebe und Motor nach unten gedrückt, also in Richtung zur Verfahrebene hin. Auf diese Weise ist ein genügend hoher Anpressdruck des Rades 4 gegen die Verfahrebene bewirkbar, so dass das Rad 4 auch bei maximaler Drehmomentübertragung nicht die Haftung verliert.

Die Federelemente 9 sind als entsprechend starke Druckfedern ausgeführt.

Der antreibende Elektromotor 20 und/oder das Rad 4 ist also jeweils linear geführt, wobei die Führungsachse zur Verfahrebene hin beziehungsweise weg gerichtet ist, insbesondere ist die Führungsachse parallel zur Normalenrichtung der Verfahrebene. Die Federkraft der Federelemente 9 wirkt jeweils entlang der Führungsachse.

Am Rad sind Markierungen 6 angeordnet, die von einem Sensor 42 detektierbar sind und daraus die Winkellage des Rades 4 bestimmbar ist. Der Sensor 42 ist am Getriebe 8 angeschraubt.

Das Getriebe 8 weist einerseits die Linearführung auf. Andererseits weist das Getriebe ein mit der abtreibenden Welle drehfest verbundenes Zahnrad auf, mit dem ein mit der Rotorwelle des Elektromotors 20 Verzahnungsteil, insbesondere Zahnrad und/oder Ritzel, drehfest verbunden ist.

In den Bohrungen des Gehäuses des Getriebes 8 sind als Gleitlager Kunststoffbuchsen angeordnet, welche die hindurchragenden Bolzen aufnehmen.

Das Getriebe 8 weist zwei, insbesondere parallel zueinander zugeordnete, Flanschbereiche (40, 41) auf. Dabei ist das Gehäuse, insbesondere ein Flanschteil, des Elektromotors schraubverbunden mit dem ersten Flanschbereich 40 und der zweite Flanschbereich 41 ist von einer Abdeckplatte 21 abgedeckt, die ebenfalls schraubverbunden ist, insbesondere mit dem Gehäuse des Getriebes 8.

Der das koaxial zum ersten Rad 4 angeordnete Rad 4 antreibende andere Elektromotor 20 ist an dem entsprechenden anderen Getriebe 8 am dortigen zweiten Flanschbereich 21 schraubverbunden und der dortige erste Flanschbereich 20 ist von einer Abdeckplatte 21 abgedeckt, die ebenfalls schraubverbunden ist mit dem dortigen Getriebe 8.

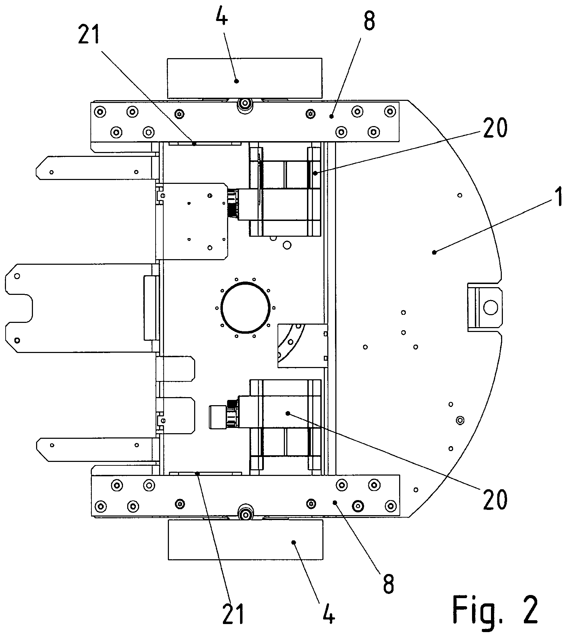

Wie in Figur 2 gezeigt, ist daher beim ersten und zweiten Rad 4 der Antriebseinheit jeweils ein gleichartiges Getriebe 8 verwendbar und trotz des jeweiligen Achsversatzes der Rotorwelle des Elektromotors 20 zur Achse des Rades 4 eine koaxiale Anordnung der beiden Elektromotoren 20 ermöglicht.

Das Getriebe 8 weist jeweils einen "ungenutzten" Flanschbereich, nämlich Bezugszeichen 40 beim ersten Getriebe 8 und Bezugszeichen 41 beim zweiten Getriebe 8, auf. Da die beiden Flanschberieche (40, 41) gleichartig, insbesondere also parallel und mit gleichem Bohrbild, ausgeführt sind, sind sie wahlweise zum Anflanschen des jeweiligen Motors 20 nutzbar.

Die beiden Flanschbereiche (40, 41) sind jeweils als Quadratflansche ausgeführt, so dass der Motor um 90°, 180° und 270° verdreht ebenfalls anmontierbar ist. Auf diese Weise ist die Kabelführung optimierbar, da das versorgende Kabel in der gewünschten Richtung, nämlich bei beiden Motoren 20 der Figur 2 parallel ausrichtbar ist.

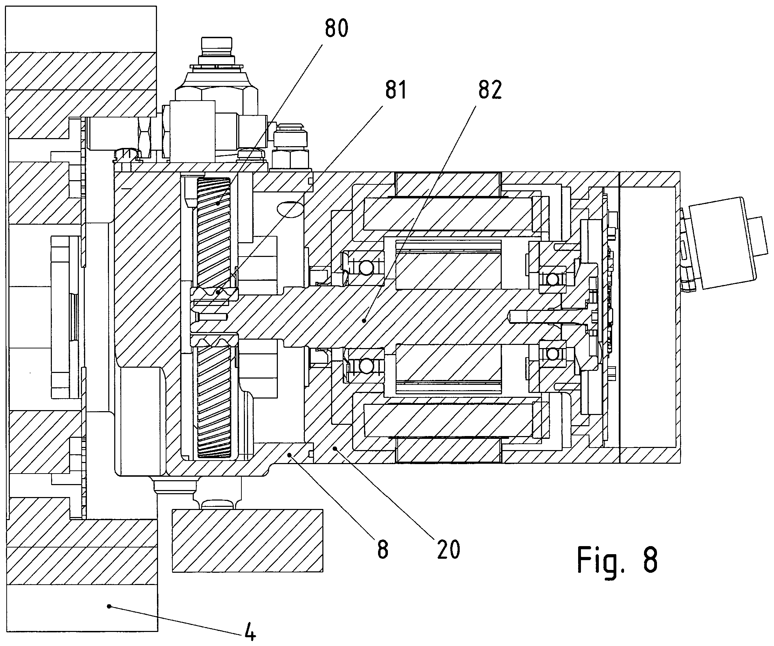

Wie in Figur 8 gezeigt, ist die Rotorwelle 82 im Motorgehäuse 20 gelagert. Die Rotorwelle 82 trägt an ihrem axialen Endbereich ein Ritzel 81 und ist mit diesem drehfest verbunden.

Das mit ihm kämmende Zahnrad 80 des Getriebes 8 ist mit dem Rad 4 verbunden.

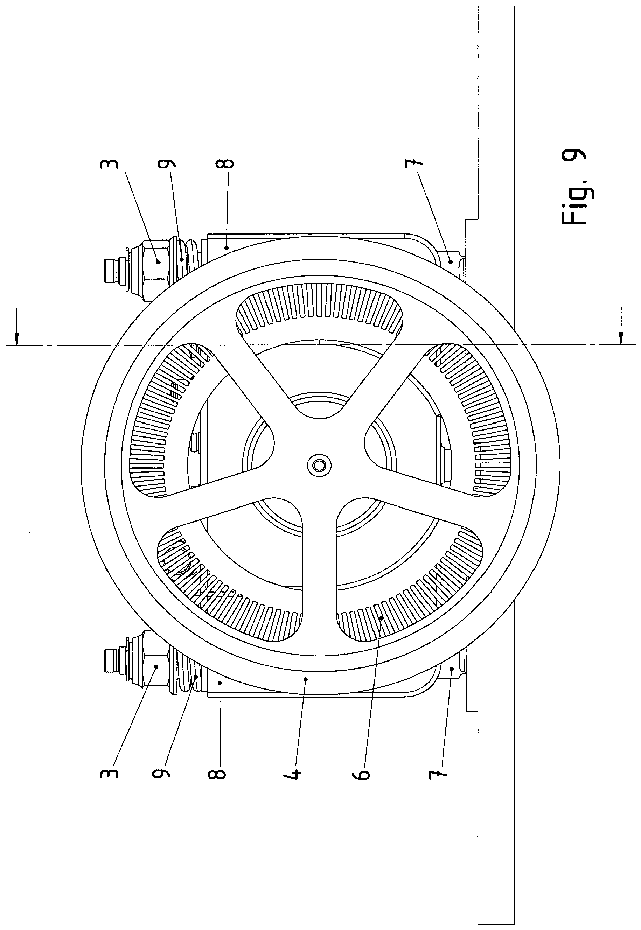

Wie in Figur 9 gezeigt sind im Getriebe 8 zwei Linearführungen, umfassend Bolzen 7, Federelement 9 und Mutter 3, vorgesehen.

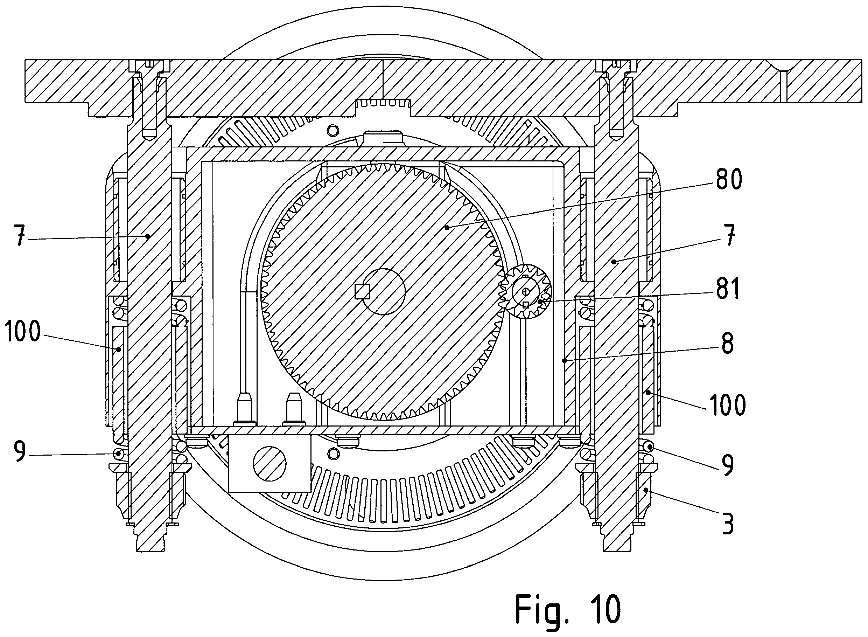

Wie in Figur 10 gezeigt sind die Bolzen in der aus Kunststoff gefertigten Buchse 100 gleitgelagert.

Bei einem weiteren erfindungsgemäßen Ausführungsbeispiel ist keine Mutter 3 vorhanden sondern der Bolzen 7 im Bereich der Mutter verdickt ausgeführt, so dass ein Abstützen der Federelemente 9 ermöglicht ist.

### Bezugszeichenliste

1 Antriebsgehäuseteil
2 Drehlager
3 Mutter
4 Rad
5 Tragplatte
6 Markierungen
7 Bolzen
8 Getriebegehäuse
9 Federelement
20 Elektromotor
21 Abdeckplatte
40 erster Flanschbereich
41 zweiter Flanschbereich
42 Sensor
80 Zahnrad
81 Ritzel
82 Rotorwelle
100 Buchse, insbesondere aus Kunststoff als Gleitlager

## Patentansprüche

1. Fahrzeug,
wobei das Fahrzeug ein Fahrgestell aufweist, an welchem Lenkrollen angeordnet sind, insbesondere so dass das Fahrzeug auf einer Verfahrebene verfahrbar ist,
wobei eine Antriebseinheit über ein Drehlager (2) mit dem Fahrgestell verbunden ist,
wobei ein erstes Rad (4) der Antriebseinheit drehfest mit der Abtriebswelle eines ersten Getriebes der Antriebseinheit verbunden ist, wobei das erste Getriebe von einem ersten Elektromotor (20) angetrieben ist,
wobei das erste Getriebe eine Linearführung umfasst, indem am Gehäuse der Antriebseinheit als Linearführungselement ein Bolzen (7), insbesondere Gewindebolzen oder Schraubbolzen oder Schraube, angeordnet ist, der durch eine Bohrung des Getriebes, insbesondere des Gehäuses des ersten Getriebes , hindurchragt und ein Federelement (9) am Bolzen (7) oder an einem Vorsprung des Bolzens (7), insbesondere an einer am Bolzen (7) befestigten Mutter, abgestützt ist, das auf das erste Getriebe, insbesondere auf das Gehäuse des ersten Getriebes, drückt, **dadurch gekennzeichnet, dass** in der jeweiligen Bohrung eine jeweilige Buchse (100) angeordnet ist, in welcher der jeweilige Bolzen (7) gleitgelagert ist,
insbesondere wobei die jeweilige Buchse (100) aus Kunststoff gefertigt ist, insbesondere wobei die jeweilige Buchse (100) in die jeweilige Bohrung eingepresst verbunden ist,
wobei das Getriebe einen ersten und einen zweiten Flanschabschnitt aufweist, wobei der Motor wahlweise am ersten Flanschabschnitt oder am zweiten Flanschabschnitt montierbar ist, wobei der nicht mit dem Motor verbundene Flanschabschnitt mittels eines jeweiligen Deckelteils verschlossen ist, insbesondere das öldicht mit dem jeweiligen Gehäuse des jeweiligen Getriebes verbunden ist.

2. Fahrzeug nach Anspruch 1,
**dadurch gekennzeichnet, dass**
ein zweites Rad (4) der Antriebseinheit drehfest mit der Abtriebswelle eines zweiten Getriebes der Antriebseinheit verbunden ist, wobei das zweite Getriebe von einem zweiten Elektromotor (20) angetrieben ist,
wobei das zweite Getriebe eine insbesondere gleichartige Linearführung umfasst, indem am Gehäuse der Antriebseinheit als Linearführungselement ein Bolzen (7), insbesondere Gewindebolzen oder Schraubbolzen oder Schraube, angeordnet ist, der durch eine zweite Bohrung des zweiten Getriebes, insbesondere des Gehäuses des zweiten Getriebes, hindurchragt und ein Federelement (9) am Bolzen (7) oder an einem Vorsprung des Bolzens (7), insbesondere an einer am Bolzen (7) befestigten Mutter, abgestützt ist, das auf das zweiten Getriebe, insbesondere auf das Gehäuse des zweiten Getriebes, drückt,
in der jeweiligen zweiten Bohrung eine jeweilige Buchse (100) angeordnet ist, in welcher der jeweilige Bolzen (7) gleitgelagert ist,
insbesondere wobei die jeweilige Buchse (100) aus Kunststoff gefertigt ist, insbesondere wobei die jeweilige Buchse (100) in die jeweilige Bohrung eingepresst verbunden ist,
wobei das zweite Getriebe einen ersten und einen zweiten Flanschabschnitte aufweist, wobei der zweite Motor wahlweise am ersten der Flanschabschnitte oder am zweiten der Flanschabschnitte montierbar ist,
wobei der nicht mit dem zweiten Motor verbundene Flanschabschnitt mittels eines zweiten Deckelteils verschlossen ist, insbesondere das öldicht mit dem jeweiligen Gehäuse des zweiten Getriebes verbunden ist.

3. Fahrzeug nach mindestens einem der vorangegangenen Ansprüche,
**dadurch gekennzeichnet, dass**
die beiden Räder koaxial zueinander angeordnet sind, wobei die Rotorwellen (82) der beiden zugeordneten Motoren ebenfalls koaxial zueinander angeordnet sind.

4. Fahrzeug nach mindestens einem der vorangegangenen Ansprüche,
**dadurch gekennzeichnet, dass**
zumindest eines der Räder Markierungen (6) aufweist und die Antriebseinheit einen Sensor (42) zum Detektieren der Markierungen (6) aufweist,
insbesondere wobei der Sensor (42) elektrisch verbunden ist mit einer elektronischen Schaltung, insbesondere mit einem Umrichter, welche den das Rad (4) antreibenden Motor speist.

5. Fahrzeug nach mindestens einem der vorangegangenen Ansprüche,
**dadurch gekennzeichnet, dass**
der die jeweilige Bohrung aufnehmende Bereich des jeweiligen Gehäuses des ersten Getriebes als Kühlkörper fungiert.

6. Fahrzeug nach mindestens einem der vorangegangenen Ansprüche,
**dadurch gekennzeichnet, dass**
das erste und zweite Getriebe gleichartig ausgeführt sind und das zweite Getriebe gegenüber dem ersten Getriebe um 180° verdreht und beabstandet in Radachsrichtung angeordnet ist, wobei die Drehrichtung parallel zu der Normalenrichtung der Verfahrebene ist,
wobei jedes Getriebe einen ersten und einen zweiten Flanschabschnitt aufweist, insbesondere wobei die beiden Flanschabschnitte, insbesondere deren Bohrbilder, gleichartig ausgeführt sind,
der das erste Rad (4) antreibende Motor am ersten Flanschabschnitt des zugeordneten Getriebes befestigt ist und
der das zweite Rad (4) antreibende Motor am anderen Flanschabschnitt des zugeordneten Getriebes befestigt ist.

7. Fahrzeug nach mindestens einem der vorangegangenen Ansprüche,
**dadurch gekennzeichnet, dass**
jeder Motor ein Steckverbinderteil aufweist zum Anschluss eines Versorgungskabels,
wobei die Steckverbinderteile der Motoren parallel ausgerichtet sind.

8. Fahrzeug nach mindestens einem der vorangegangenen Ansprüche,
**dadurch gekennzeichnet, dass**
das Drehlager (2) aus einer am Fahrgestell gebildeten Hohlwelle gebildet ist, in welcher eine am Gehäuse der Antriebseinheit befestigte Welle eingeführt ist, wobei die Hohlwellenachse und die Wellenachse koaxial und parallel zur Normale der Verfahrebene ausgerichtet sind, oder dass
das Drehlager (2) aus einer am Fahrgestell gebildeten Welle gebildet ist, auf welche eine am Gehäuse der Antriebseinheit befestigte Hohlwelle aufgesteckt ist, wobei die Hohlwellenachse und die Wellenachse koaxial und parallel zur Normale der Verfahrebene ausgerichtet sind.

9. Getriebe
**dadurch gekennzeichnet, dass**
das Getriebegehäuse (8) zwei gleichartige Flanschbereiche (40, 41) aufweist, wobei das Gehäuse eines Elektromotors (20) wahlweise an einem der beiden Flanschberieche schraubverbindbar ist,
wobei der Elektromotor (20) eine Rotorwelle (82) aufweisen kann, die mit einer Verzahnung drehfest verbindbar ist, welche mit einem Zahnrad (80) des Getriebes in Eingriff stehen kann, wobei das Zahnrad (80) mit einer Welle, insbesondere Abtriebswelle, des Getriebes drehfest verbunden ist, welche gelagert ist im Gehäuse des Getriebes,
insbesondere wobei mit der Welle ein Rad (4) einer Antriebseinheit drehfest verbunden ist.

10. Getriebe nach mindestens einem der vorangegangenen Ansprüche,
**dadurch gekennzeichnet, dass**
jeder Flanschbereich (40, 41) als Quadratflansch ausgeführt ist, wobei eine diskrete Drehsymmetrie des Flanschbereichs (40, 41) von jeweils 90° vorgesehen ist., insbesondere wobei die Drehsymmetrieachse der Drehsymmetrie der Rotorwellenachse gleicht.

11. Getriebe nach mindestens einem der vorangegangenen Ansprüche,
**dadurch gekennzeichnet, dass**
die beiden Flanschberieche symmetrisch zur Achse des Zahnrads (80) angeordnet sind,
insbesondere also der Schwerpunkt jedes Flanschbereichs (40, 41) denselben Achsabstand zur Achse des Zahnrades (80) aufweist.

12. Getriebe nach mindestens einem der vorangegangenen Ansprüche,
**dadurch gekennzeichnet, dass**
das Getriebe Linearführungen umfasst,
wobei das Getriebe mittels der Linearführung linear relativ bewegbar zu einer Tragplatte (5) ist.

13. Getriebe nach mindestens einem der vorangegangenen Ansprüche,
**dadurch gekennzeichnet, dass**
das Getriebegehäuse (8) Bohrungen aufweist, in die jeweils eine Buchse (100), insbesondere eine Kunststoffbuchse, eingepresst ist, welche als Gleitlager für einen jeweiligen in der Buchse (100) aufgenommene, insbesondere durch die jeweilige Bohrung hindurchragenden, Bolzen (7) fungiert
und/oder dass
ein Federelement (9) zwischen dem Getriebegehäuse (8) und dem Bolzen (7) oder einem mit dem Bolzen (7) verbundenen Teil vorgesehen ist.

## Claims

1. A vehicle,
wherein the vehicle has an underbody on which steering rollers are arranged, in particular so that the vehicle can be moved on a travelling plane,
wherein a drive unit is connected to the underbody by means of a rotary bearing (2), wherein a first wheel (4) of the drive unit is connected non-rotatably to the output shaft of a first gear unit of the drive unit, wherein the first gear unit is driven by a first electric motor (20),
wherein the first gear unit comprises a linear guide, in that a bolt (7), in particular threaded bolt or screw bolt or screw, is arranged as a linear guide element on the casing of the drive unit, which bolt protrudes through a bore in the gear unit, in particular in the casing of the first gear unit, and a spring element (9) is supported on the bolt (7) or on a projection of the bolt (7), in particular on a nut fastened to the bolt (7), which element presses on the first gear unit, in particular on the casing of the first gear unit, **characterised in that**
a respective bush (100) is arranged in the respective bore, in which bush the respective bolt (7) is plain-bearing mounted,
in particular wherein the respective bush (100) is manufactured from plastics material, in particular wherein the respective bush (100) is connected pressed into the respective bore,
wherein the gear unit has a first and a second flange portion, wherein
the motor can be mounted either on the first flange portion or on the second flange portion,
wherein that flange portion which is not connected to the motor is closed by means of a respective cover part, in particular which is connected in oil-tight manner to the respective casing of the respective gear unit.

2. A vehicle according to Claim 1,
**characterised in that**
a second wheel (4) of the drive unit is connected non-rotatably to the output shaft of a second gear unit of the drive unit, wherein the second gear unit is driven by a second electric motor (20),
wherein the second gear unit comprises a linear guide, in particular of the same kind, **in that** a bolt (7), in particular threaded bolt or screw bolt or screw, is arranged as a linear guide element on the casing of the drive unit, which bolt protrudes through a second bore in the second gear unit, in particular in the casing of the second gear unit, and a spring element (9) is supported on the bolt (7) or on a projection of the bolt (7), in particular on a nut fastened to the bolt (7), which element presses on the second gear unit, in particular on the casing of the second gear unit,
a respective bush (100) is arranged in the respective second bore, in which bush the respective bolt (7) is plain-bearing mounted,
in particular wherein the respective bush (100) is manufactured from plastics material, in particular wherein the respective bush (100) is connected pressed into the respective bore,
wherein the second gear unit has a first and a second flange portion, wherein the second motor can be mounted either on the first one of the flange portions or on the second one of the flange portions,
wherein that flange portion which is not connected to the second motor is closed by means of a second cover part, in particular which is connected in oil-tight manner to the respective casing of the second gear unit.

3. A vehicle according to at least one of the preceding claims,
**characterised in that**
the two wheels are arranged coaxially with each other, wherein the rotor shafts (82) of the two associated motors are likewise arranged coaxially with each other.

4. A vehicle according to at least one of the preceding claims,
**characterised in that**
at least one of the wheels has markings (6) and the drive unit has a sensor (42) for detecting the markings (6),
in particular wherein the sensor (42) is electrically connected to an electronic circuit, in particular to a converter, which feeds the motor driving the wheel (4).

5. A vehicle according to at least one of the preceding claims,
**characterised in that**
that region of the respective casing of the first gear unit which receives the respective bore acts as a cooling body.

6. A vehicle according to at least one of the preceding claims,
**characterised in that**
the first and second gear unit are of the same kind and the second gear unit is arranged turned through 180° and spaced apart in the wheel axis direction relative to the first gear unit, wherein the direction of rotation is parallel to the normal direction of the travelling plane,
wherein each gear unit has a first and a second flange portion, in particular wherein the two flange portions, in particular the drilling patterns thereof, are of the same kind,
the motor driving the first wheel (4) is fastened to the first flange portion of the associated gear unit, and
the motor driving the second wheel (4) is fastened to the other flange portion of the associated gear unit.

7. A vehicle according to at least one of the preceding claims,
**characterised in that**
each motor has a plug-in connector part for connecting a supply cable,
wherein the plug-in connector parts of the motors are oriented in parallel.

8. A vehicle according to at least one of the preceding claims,
**characterised in that**
the rotary bearing (2) is formed from a hollow shaft formed on the underbody in which a shaft fastened to the casing of the drive unit is introduced, wherein the hollow shaft axis and the shaft axis are oriented coaxially and parallel to the normal of the travelling plane,
or **in that**
the rotary bearing (2) is formed from a shaft formed on the underbody on which a hollow shaft fastened to the casing of the drive unit is placed, wherein the hollow shaft axis and the shaft axis are oriented coaxially and parallel to the normal of the travelling plane.

9. A gear unit,
**characterised in that**
the gear unit casing (8) has two flange regions (40, 41) of the same kind, wherein the casing of an electric motor (20) can be screw-connected to either one of the two flange regions,
wherein the electric motor (20) may have a rotor shaft (82) which can be connected non-rotatably to toothing which can be engaged with a gear wheel (80) of the gear unit,
wherein the gear wheel (80) is connected non-rotatably to a shaft, in particular output shaft, of the gear unit which is mounted in the casing of the gear unit,
in particular wherein a wheel (4) of a drive unit is connected non-rotatably to the shaft.

10. A gear unit according to at least one of the preceding claims,
**characterised in that**
each flange region (40, 41) is embodied as a square flange, wherein a discrete rotational symmetry of the flange region (40, 41) of 90° in each case is provided, in particular wherein the axis of rotational symmetry of the rotational symmetry is identical to the rotor shaft axis.

11. A gear unit according to at least one of the preceding claims,
**characterised in that**
the two flange regions are arranged symmetrically to the axis of the gear wheel (80),
in particular therefore the centre of gravity of each flange region (40, 41) is at the same axial distance from the axis of the gear wheel (80).

12. A gear unit according to at least one of the preceding claims,
**characterised in that**
the gear unit comprises linear guides,
wherein the gear unit is movable linearly relative to a supporting plate (5) by means of the linear guide.

13. A gear unit according to at least one of the preceding claims,
**characterised in that**
the gear unit casing (8) has bores into which in each case a bush (100), in particular a plastics-material bush, is pressed, which acts as a plain bearing for a respective bolt (7) received in the bush (100), in particular one which protrudes through the respective bore,
and/or **in that**
a spring element (9) is provided between the gear unit casing (8) and the bolt (7) or a part connected to the bolt (7).

## Revendications

1. Véhicule,
sachant que le véhicule présente un châssis sur lequel sont disposés des galets de direction, en particulier de telle sorte que le véhicule peut être déplacé sur un plan de déplacement,
sachant qu'une unité d'entraînement est reliée au châssis par l'intermédiaire d'un palier de rotation (2),
sachant qu'une première roue (4) de l'unité d'entraînement est reliée solidairement en rotation à l'arbre de sortie d'une première transmission de l'unité d'entraînement, sachant que la première transmission est entraînée par un premier moteur électrique (20), sachant que la première transmission comprend un guide linéaire, par le fait qu'un boulon (7), en particulier un boulon fileté ou un boulon de vis ou une vis, est disposé comme élément de guidage linéaire sur le carter de l'unité d'entraînement, boulon qui traverse un perçage de la transmission, en particulier du carter de la première transmission, et qu'un élément formant ressort (9) prend appui sur le boulon (7) ou sur une saillie du boulon (7), en particulier sur un écrou fixé sur le boulon (7), élément qui exerce une pression sur la première transmission, en particulier sur le carter de la première transmission,
**caractérisé en ce qu'**une douille respective (100) est disposée dans le perçage respectif, douille dans laquelle le boulon respectif (7) est monté à glissement,
sachant en particulier que la douille respective (100) est réalisée en matière plastique, sachant en particulier que la douille respective (100) est reliée par emmanchement dans le perçage respectif,
sachant que la transmission présente une première partie formant flasque et une deuxième partie formant flasque, sachant que le moteur peut être monté au choix sur la première partie formant flasque ou sur la deuxième partie formant flasque,
sachant que la partie formant flasque non reliée au moteur peut être fermée au moyen d'un élément formant couvercle respectif, en particulier qui est relié en étanchéité à l'huile au carter respectif de la transmission respective.

2. Véhicule selon la revendication 1, **caractérisé en ce que** une deuxième roue (4) de l'unité d'entraînement est reliée solidairement en rotation à l'arbre de sortie d'une deuxième transmission de l'unité d'entraînement, sachant que la deuxième transmission est entraînée par un deuxième moteur électrique (20),
sachant que la deuxième transmission comprend un guide linéaire, en particulier similaire, par le fait qu'un boulon (7), en particulier un boulon fileté ou un boulon de vis ou une vis, est disposé comme élément de guidage linéaire sur le carter de l'unité d'entraînement, boulon qui traverse un deuxième perçage de la deuxième transmission, en particulier du carter de la deuxième transmission, et qu'un élément formant ressort (9) prend appui sur le boulon (7) ou sur une saillie du boulon (7), en particulier sur un écrou fixé sur le boulon (7), élément qui exerce une pression sur la deuxième transmission, en particulier sur le carter de la deuxième transmission,
une douille respective (100) est disposée dans le deuxième perçage respectif, douille dans laquelle le boulon respectif (7) est monté à glissement,
sachant en particulier que la douille respective (100) est réalisée en matière plastique, sachant en particulier que la douille respective (100) est reliée par emmanchement dans le perçage respectif,
sachant que la deuxième transmission présente une première partie formant flasque et une deuxième partie formant flasque,
sachant que le deuxième moteur peut être monté au choix sur la première partie formant flasque ou sur la deuxième partie formant flasque,
sachant que la partie formant flasque non reliée au deuxième moteur peut être fermée au moyen d'un deuxième élément formant couvercle, en particulier qui est relié en étanchéité à l'huile au carter respectif de la deuxième transmission.

3. Véhicule selon au moins une des revendications précédentes, **caractérisé en ce que** les deux roues sont disposées coaxialement l'une par rapport à l'autre, sachant que les arbres de rotor (82) des deux moteurs associés sont eux aussi disposés coaxialement l'un par rapport à l'autre.

4. Véhicule selon au moins une des revendications précédentes, **caractérisé en ce qu'**au moins une des roues présente des repères (6) et que l'unité d'entraînement présente un capteur (42) pour détecter les repères (6),
sachant en particulier que le capteur (42) est électriquement relié à un montage électronique, en particulier à un convertisseur, qui alimente le moteur entraînant la roue (4).

5. Véhicule selon au moins une des revendications précédentes, **caractérisé en ce que** la région du carter respectif de la première transmission qui loge le perçage respectif joue le rôle de corps de refroidissement.

6. Véhicule selon au moins une des revendications précédentes, **caractérisé en ce que**
la première transmission et la deuxième transmission sont réalisées de la même manière et la deuxième transmission est tournée à 180° par rapport à la première transmission et disposée à distance dans la direction de l'axe de la roue, sachant que la direction de rotation est parallèle à la direction normale du plan de déplacement,
sachant que chaque transmission présente une première partie formant flasque et une deuxième partie formant flasque,
sachant en particulier que les deux parties formant flasques, en particulier leurs configurations de perçages, sont réalisées de la même manière,
le moteur entraînant la première roue (4) est fixé sur la première partie formant flasque de la transmission associée,
et le moteur entraînant la deuxième roue (4) est fixé sur l'autre partie formant flasque de la transmission associée.

7. Véhicule selon au moins une des revendications précédentes, **caractérisé en ce que** chaque moteur présente un élément formant connecteur pour le raccordement d'un câble d'alimentation,
sachant que les éléments formant connecteurs des moteurs sont orientés en parallèle.

8. Véhicule selon au moins une des revendications précédentes, **caractérisé en ce que** le palier de rotation (2) est formé d'un arbre creux formé sur le châssis et dans lequel est introduit un arbre fixé sur le carter de l'unité d'entraînement, sachant que l'axe de l'arbre creux et l'axe de l'arbre sont orientés coaxialement et parallèlement à la normale du plan de déplacement,
ou **en ce que** le palier de rotation (2) est formé d'un arbre formé sur le châssis et sur lequel est emboîté un arbre creux fixé sur le carter de l'unité d'entraînement, sachant que l'axe de l'arbre creux et l'axe de l'arbre sont orientés coaxialement et parallèlement à la normale du plan de déplacement,

9. Transmission, **caractérisée en ce que** le carter de transmission (8) présente deux régions formant flasques (40, 41) de même type, sachant que le carter d'un moteur électrique (20) peut être boulonné au choix sur une des deux régions formant flasques,
sachant que le moteur électrique (20) peut présenter un arbre de rotor (82) qui peut être relié solidairement en rotation à une denture qui peut se trouver en prise avec une roue dentée (80) de la transmission,
sachant que la roue dentée (80) est reliée solidairement en rotation à un arbre, en particulier un arbre de sortie, de la transmission, arbre qui est monté dans le carter de la transmission,
sachant en particulier qu'une roue (4) d'une unité d'entraînement est reliée solidairement en rotation à l'arbre.

10. Transmission selon au moins une des revendications précédentes, **caractérisée en ce que** chaque région formant flasque (40, 41) est réalisée sous forme de flasque carré, sachant qu'il est prévu une symétrie rotationnelle discrète de la région formant flasque (40, 41) de respectivement 90°, sachant en particulier que l'axe de symétrie rotationnelle de la symétrie rotationnelle est égal à l'axe de l'arbre de rotor.

11. Transmission selon au moins une des revendications précédentes, **caractérisée en ce que** les deux régions formant flasques sont disposées symétriquement par rapport à l'axe de la roue dentée (80),
en particulier donc le barycentre de chaque région formant flasque (40, 41) présente la même distance axiale par rapport à l'axe de la roue dentée (80).

12. Transmission selon au moins une des revendications précédentes, **caractérisée en ce que** la transmission comprend des guides linéaires,
sachant que la transmission peut, au moyen du guide linéaire, être déplacée linéairement relativement à une plaque de support (5).

13. Transmission selon au moins une des revendications précédentes, **caractérisée en ce que** le carter de transmission (8) présente des perçages dans chacun desquels est emmanchée une douille 100), en particulier une douille en matière plastique, qui sert de palier à glissement pour un boulon respectif (7) reçu dans la douille (100), en particulier traversant le perçage respectif,
et/ou **en ce qu'**un élément formant ressort (9) est prévu entre le carter de transmission (8) et le boulon (7) ou un élément relié au boulon (7).
